# EUROPEAN PATENT APPLICATION

(11) **EP 1 912 435 A2**
(43) Date of publication of application: **16.04.2008**
(21) Application number: 07110179.4
(22) Date of filing: 13.06.2007
(51) Int. Cl.: H04N 5/445

(54) **Device and method for detecting mime type in digital video broadcasting terminal**

(30) Priority: 18.08.2006 KR 20060078410
(71) Applicant: Samsung Electronics Co., Ltd., Suwon-si, Gyeonggi-do 442-743 (KR)
(72) Inventor: Choe, Jun-Young, Yeongtong-gu, Suwon-si Gyeonggi-do (KR); Kim, Young-Jip, Yeongtong-gu, Suwon-si Gyeonggi-do (KR); Kim, Hyun-Chul, Yeongtong-gu, Suwon-si Gyeonggi-do (KR); Seok, Jeong-Mi, Yeongtong-gu, Suwon-si Gyeonggi-do (KR); Lee, Kyoung-Shin, Yeongtong-gu, Suwon-si Gyeonggi-do (KR)
(74) Representative: Zimmer, Franz-Josef

(57) **Abstract**

Disclosed are a device and method for detecting a Multimedia Internet Message Extension (MIME) type in a digital video broadcasting terminal, which can detect the MIME type of at least one file from Electronic Service Guide (ESG) data in order to provide a file download service. The device includes a digital broadcasting reception unit for receiving ESG data, a memory for storing information necessary for the file download service in the ESG, and a controller for detecting the MIME type of each of plural files through at least one of MIME types defined in a component description of a corresponding application, in container data including file data, or in a File Description Table (FDT) for an individual transmission of the file data, if the plural files exist in the corresponding application for the file download service in the ESG data.

## Description

The present invention relates generally to a device and method for detecting a Multimedia Internet Message Extension (MIME) type of in a digital video broadcasting terminal, and more particularly to a device and method for detecting a MIME type in a digital video broadcasting terminal, which can detect the MIME type of at least one file from Electronic Service Guide (ESG) data in order to provide a file download service.

Generally, digital broadcastings transmit digital broadcasting signals instead of analog signals, in order to provide users with high definition, superior sound and a wide array of services. For example, the digital broadcastings may be classified into Digital Video Broadcasting-Terrestrial (DVB-T), Digital Audio Broadcasting (DAB), Digital Multimedia Broadcasting (DMB), MediaFLO and Digital Video Broadcasting-Handheld (DVB-H).

DVB-H is a technical standard for providing terrestrial digital broadcasting which can be received by mobile terminals with high reception. The DVB-H realizes a mobile digital multimedia broadcasting capable of transmitting broadcasting or contents with high quality video and superior sound to mobile users who may be driving a vehicle, walking or participating in any such mobile act in any place and time.

Unlike other digital broadcasting, the DVB-H transmits ESG data containing important information which is necessary for broadcasting services. Currently, the DVB-H uses a File Delivery over Unidirectional Transport (FLUTE) protocol as a Content Delivery Protocol (CDP). Such a FLUTE protocol is used for transmitting text, audio, video and image files. In the initial DVB-H which has been currently realized, the FLUTE protocol is used to download a file necessary for configuring and updating the ESG data.

The ESG data includes information on the services provided by the DVB-H. Hence, it is possible to select channel services such as TeleVision (TV) channels and audio channels, and a file download service through the EGS data.

The file download service is for downloading file data necessary to provide services such as Hyper Text Markup Language (HTML) pages, AV files and ring tones, as well as a streaming service, through the FLUTE protocol. In order to obtain file data for use for a certain amount of time, the DVB-H opens a corresponding FLUTE session to receive corresponding file data from the ESG data using information on a Session Description Protocol (SDP).

The ESG data defined in the DVB-H service includes seven fragments, i.e. service-bundle, purchase, purchase-channel, service, schedule-event, content and acquisition fragments.

The file download service is carried out through the service-bundle, schedule-event, content and acquisition fragments.

The service-bundle and schedule-event fragments transmit the SDP and file information, which are necessary for service, from the acquisition fragment. The acquisition fragment defines information on the SDP stream for the service or used for obtaining the SDP.

Currently, an exact method has not yet been proposed which can detect the file data of a file that is capable of being downloaded in the file download service. Since MIME types capable of supporting various applications and being used for each application are limited, it is difficult to define the MIME types depending on all applications and use of each application. Further, in using conventional arts, the MIME types for all contents are inefficiently defined in advance, making it impossible to satisfy the newly added contents.

Accordingly, the present invention has been made to solve the above-mentioned problems occurring in the prior art. It is the object of the present invention to provide a device and method for detecting an MIME type of at least one file for a file download service from ESG data in a digital video broadcasting terminal.

This object is solved by the subject matter of the independent claims.

Preferred embodiments are defined by the subject matter of the dependent claims.

It is an aspect of the present invention to provide a device and method for detecting MIME types in a digital video broadcasting terminal, which can receive necessary files according to contents when a file download service is carried out in a digital video broadcasting service.

In order to accomplish the above, according to the present invention, there is provided a device for detecting a MIME type of at least one file for a file download service in a digital video broadcasting terminal, which includes a digital broadcasting reception unit for receiving ESG data including information on a digital video broadcasting service, a memory for storing information necessary for the file download service in the ESG, and a controller for detecting the MIME type of each of plural files through at least one of a MIME type defined in a component description of a corresponding application, a MIME type defined in container data including file data, or a MIME type defined in a File Description Table (FDT) for an individual transmission of the file data, if plural files exist in the corresponding application for the file download service in the ESG data.

According to the present invention, there is provided a method for detecting a MIME type of at least one file for a file download service in a digital video broadcasting terminal, which includes determining the number of files which exist in a corresponding application for the file download service in ESG data, determining whether an MIME type is defined in a component description of the corresponding application if a plurality of files exists in the corresponding application, detecting a MIME type of each of the plural files through the MIME type defined in the component description of the corresponding application if the MIME type is defined in the corresponding application, and detecting an MIME type of each of the plural files through at least one of an MIME type defined in container data including file data and an FDT for an individual transmission of the file data if the MIME type is not defined in the component description of the corresponding application.

According to the present invention, there is provided a method for detecting an MIME type of at least one file for a file download service in a digital video broadcasting terminal, which includes determining the number of files which exist in a corresponding application for the file download service in ESG data, checking a component characteristic of an acquisition fragment if a plurality of files exists in the corresponding application, checking a component description of the corresponding application defined in the component characteristic, checking whether a file format element exists in the component description of the corresponding application, checking a file name and MIME type defined in the corresponding component description if the file format element exists in the component description of the corresponding application, and detecting an MIME type of each of the plural files through the checked file name and MIME type.

According to the present invention, there is provided a method for detecting an MIME type of at least one file for a file download service in a digital video broadcasting terminal, which includes determining the number of files which exist in a corresponding application for the file download service in ESG data, checking a component characteristic of an acquisition fragment if a plurality of files exists in the corresponding application, checking a component description of the corresponding application defined in the component characteristic, checking whether a file format element exists in the component description of the corresponding application, checking whether container data including file data is transmitted when the file format element does not exist in the component description of the corresponding application, and detecting an MIME type of each of the plural files through an MIME type defined in auxiliary data of the container data if the container data including the file data is transmitted.

According to the present invention, there is provided a method for detecting an MIME type of at least one file for a file download service in a digital video broadcasting terminal, which includes determining the number of files which exist in a corresponding application for the file download service in ESG data, checking a component characteristic of an acquisition fragment if a plurality of files exists in the corresponding application, checking a component description of the corresponding application defined in the component characteristic, checking whether container data including file data is transmitted when the file format element does not exist in the component description of the corresponding application, checking whether an FDT for an individual transmission of the file data includes a content-type of the MIME type when the container data does not include the file data, and detecting an MIME type of each of the plural files through an MIME type defined in the content-type if the FDT includes the content-type of the MIME type.

According to the present invention, there is provided a method for detecting an MIME type of at least one file for a file download service in a digital video broadcasting terminal, which includes determining the number of files which exist in a corresponding application for the file download service in ESG data, and detecting an MIME type of each of the plural files through at least one of an MIME type defined in a component description of the corresponding application, an MIME type defined in container data including file data, an MIME type defined in a FDT for an individual transmission of the file data, and an extension of a file defined in the FDT.

The present invention will be more apparent from the following detailed description taken in conjunction with the accompanying drawings, in which:
FIG. 1 illustrates a configuration of a digital video broadcasting terminal according to the present invention; and
FIG. 2 illustrates processes for detecting an MIME type of at least one file in order to provide a file download service in a digital video broadcasting terminal according to the present invention.

Hereinafter, preferred embodiments of the present invention will be described in detail with reference to the accompanying drawings. The same reference numerals denote the same structural elements throughout the accompanying drawings. A detailed description of known functions and configurations incorporated herein has been omitted for the sake of clarity and conciseness.

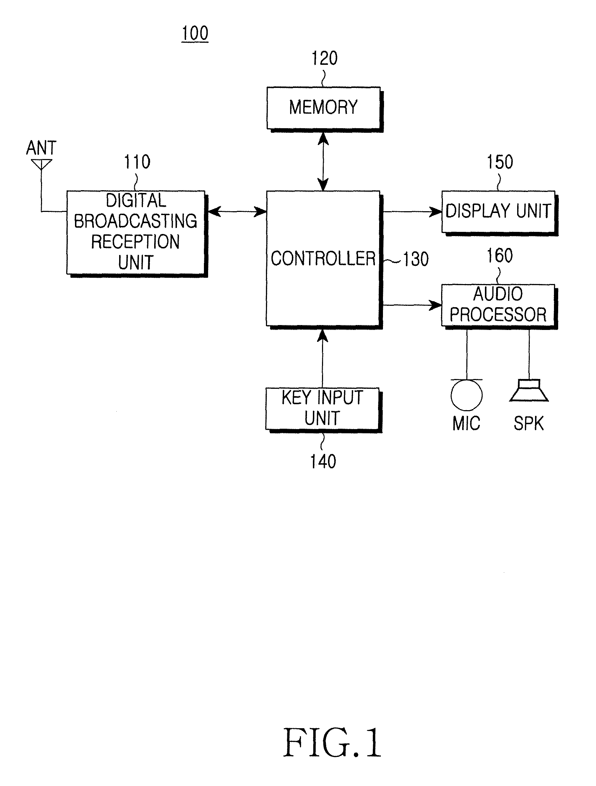

FIG. 1 illustrates a configuration of a digital video broadcasting terminal according to the present invention. As shown in FIG. 1, the digital video broadcasting terminal 100 includes a digital broadcasting reception unit 110, a memory 120, a controller 130, a key input unit 140, a display unit 150 and an audio processor 160.

When the controller 130 selects a broadcasting channel of a specific broadcasting station, the digital broadcasting reception unit 110 receives and demodulates the digital broadcasting data of a selected channel among the digital broadcasting data according to broadcasting channels in a frequency band used by a broadcasting station, and then outputs the demodulated digital broadcasting frame to the controller 130. If the digital broadcasting system according to the present invention is a DVB-H broadcasting system, the digital broadcasting reception unit 110 may be a DVB-H Orthogonal Frequency Division Multiplexing (OFDM) demodulator which OFDM-demodulates signals received from a broadcasting station which transmits DVB-H broadcasting data and then outputs digital broadcasting data of the selected channel. The digital broadcasting reception unit 110 receives ESG data stream in the transmission stream of the digital broadcasting from the digital broadcasting equipment. The digital broadcasting reception 110 may construct a Radio Frequency (RF) unit including an RF transmitter for up-converting and amplifying the frequency of signals to be transmitted, and an RF receiver for down-converting and low-noise amplifying the received signals.

The memory 120 stores data necessary for controlling the digital video broadcasting terminal. Specifically, the memory 120 stores information for the file download service contained in the ESG data received from the digital broadcasting equipment.

The controller 130 controls overall operation of the digital video broadcasting terminal, and decodes the digital broadcasting stream which is output form the digital broadcasting reception unit 110, so as to output the decoded digital broadcasting stream to the display unit 150 and the audio processor 160 through a video signal processor (not shown) and an audio signal processor (not shown).

Further, the controller 130 detects the MIME types of files which exist in each application for the file download service according to the present invention.

Specifically, when a plurality of files exists in a corresponding application for the file download service according to the present invention, the controller 130 checks the component characteristic of the acquisition fragment and the component description of the corresponding application defined in the component characteristic. The controller 130 identifies the existence of a file format in the component description of the corresponding application and then detects the MIME type of each file through the MIME types defined in the component description of the corresponding application.

If the file format does not exist in the component description of the corresponding application, the controller 130 determines whether container data including the file data is received. If the container data including the file data is received, the controller detects an MIME type for the plurality of files through the MIME type defined in auxiliary data of the container data.

If the container data does not includes the file data, the controller determines whether a content-type of the MIME type is included in an FDT which stores information on the file data to be individually transmitted in the file download service, and detects the MIME type for each file through the content-type if the FDT includes the content-type.

If the FDT does not include the content-type of the MIME type, the controller 130 detects the MIME type of each file through extension of the file defined in the FDT.

If a plurality of the files exists in the corresponding application, the controller 130 detects a type of the corresponding application through the MIME type defined in the acquisition fragment.

If a file exists in the corresponding application according to the present invention, the controller 130 detects the MIME type for the file through the content MIME type defined in the acquisition fragment.

The key input unit 140 receives and transmits users operation signals such as key inputs to the controller 130.

The display unit 150 preferably includes a Liquid Crystal Display (LCD) which displays various data generated by the digital video broadcasting terminal 100 and sufficiently supports the resolution of the broadcasting data. If a touch screen type LCD is used, the display unit 150 may operate as an input unit.

The audio processor 160 modulates electric signal input from a microphone and then converts the modulated signal into sound data. The audio processor 160 demodulates encoded sound data, which is input from the digital broadcasting reception unit 110, into an electric signal and then outputs the electric signal to a speaker. The audio processor 160 includes a data codec processing packet data and the like, and an audio codec processing audio signals such as sound. The audio processor may be integrated with the controller 130.

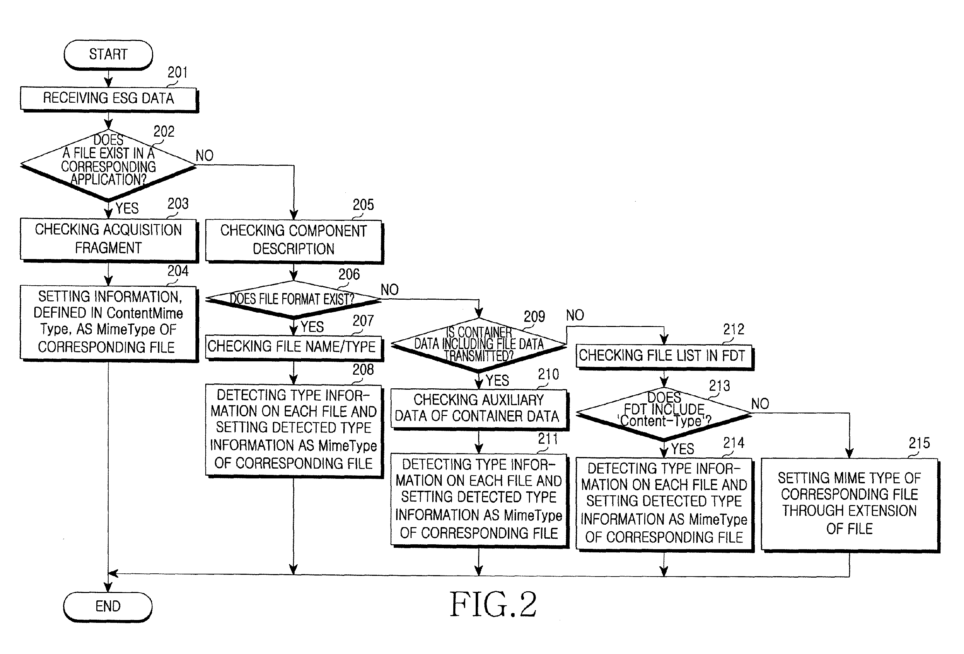

FIG. 2 illustrates processes for detecting an MIME type of at least one file in order to provide a file download service in a digital video broadcasting terminal according to the present invention.

Referring to FIG. 2, when the digital broadcasting reception unit 110 of the digital video broadcasting terminal 100 receives ESG data, the controller 130 detects the reception of the ESG data and carries out a process of detecting the MIME type of at least one file included in at least one application for the file download service provided by the ESG data in step 202.

In the process of detecting the MIME type of at least one file included in the at least one application, the controller 130 determines the number of files included in the corresponding application.

If only one file exists in the corresponding application for the file download service, the controller 130 detects the existence of the file in step 202 and then proceeds to step 203 so as to check the acquisition fragment which provides information on SDP and file which the service bundle fragment or schedule event fragment requires.

Table 1 shows syntax of the acquisition fragment.

The controller 130 proceeds to step 204 and detects information, i.e. MPEG7.MIME type, on the MIME type defined in "content MIMEType" of the acquisition fragment as the MIME type for one file.

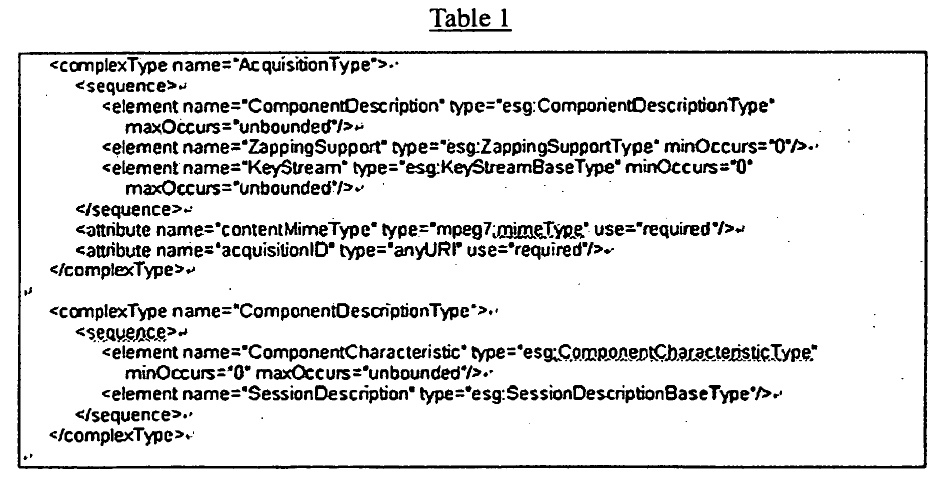

In step 204, since one file exists in the corresponding application, the controller 130 detects the MIME type of the file through the "contentMIMEType" of the acquisition fragment, or controls the detection of the MIME type for the corresponding application.

However, if a plurality of files exists in the corresponding application for the file download service, the controller 130 detects the existence of the plural files in step 202, and proceeds to step 205 so as to check the component description of the corresponding application included in the acquisition fragment.

Table 2 shows syntax with respect to the component characteristic included in the acquisition fragment. Table 3 shows syntax relating to the FileDownComponentType defined in the component characteristic.

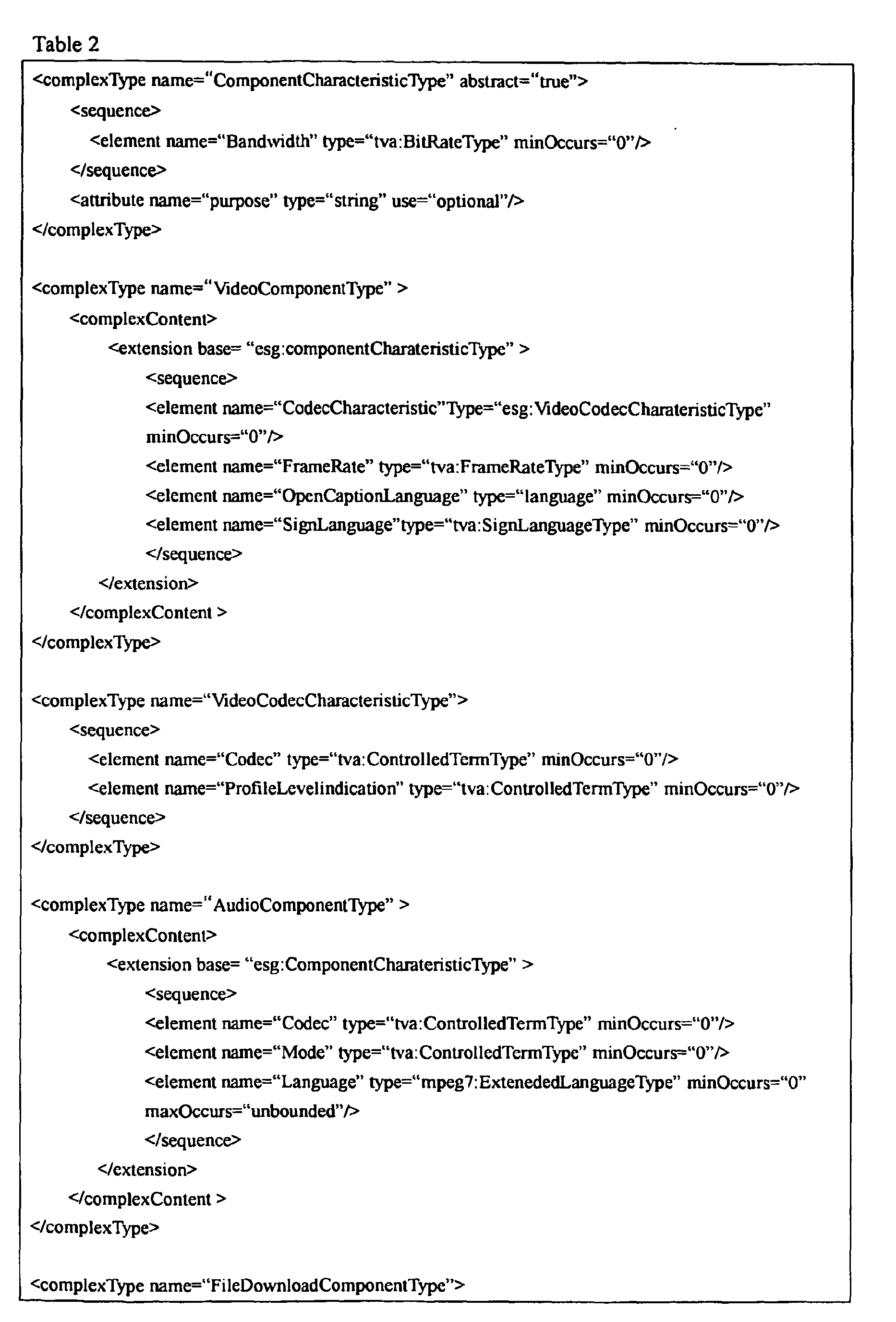

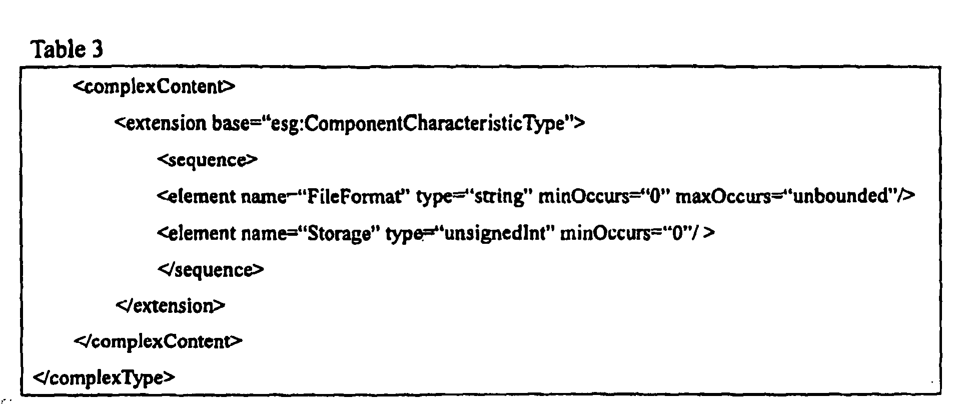

The acquisition fragment includes the MIME type for the service fragment or the schedule event fragment, and component characteristic according to services. The component characteristic defines the component description for the corresponding application.

The acquisition fragment essentially includes the definition of "contentMIMEType". However, since the acquisition fragment selectively includes the component description for the corresponding application, the information on the file included in the corresponding application may also not be defined.

Thus, the controller 130 checks the component characteristic of the acquisition fragment, and the component description corresponding to each application defined in the component characteristic in step 205.

As a result of checking the component description of the corresponding application, if an file format element exists, the controller 130 detects the existence of the file format element in step 206, and proceeds to step 207 so as to check file name/MIME type defined in the corresponding component description. A plurality of file names and the MIME types corresponding to the file names are defined in the component description of the corresponding application. Thus, the controller 130 proceeds to step 208 and detects the MIME type of each file included in the corresponding application through the checked file names/MIME types.

When detecting the MIME type of each file included in the corresponding application through the checked file names/MIME types in step 208, the controller 130 detects the type of the corresponding application through "contentMIMEType" of the acquisition fragment.

As a result of checking the component description of the corresponding application, if the file format element does not exist, the controller 130 detects the absence of the file format element in step 206 and then determines whether the container data including the file data is transmitted.

The container data includes the ESG data, particularly the file data and information on the file data. Therefore, the file data for file download service may be transmitted along with the container data in advance or individually while the file download service is provided.

If the file data for the file download service is transmitted along with the container data, the controller 130 detects the transmission of the container data with the file data in step 209, and then proceeds to step 210 so as to check the auxiliary data of the container data.

Table 4 shows syntax of a data repository, and Table 5 shows syntax of the auxiliary data.

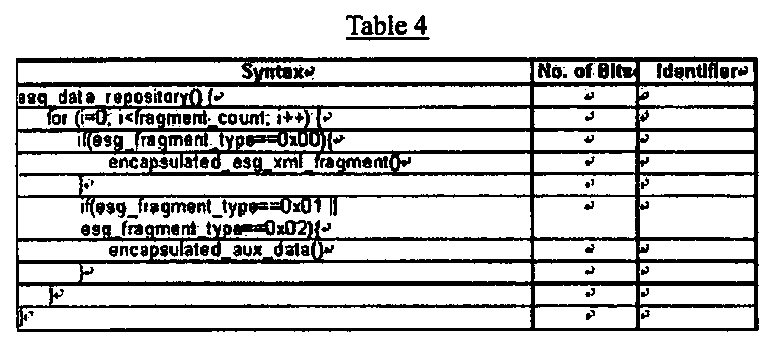

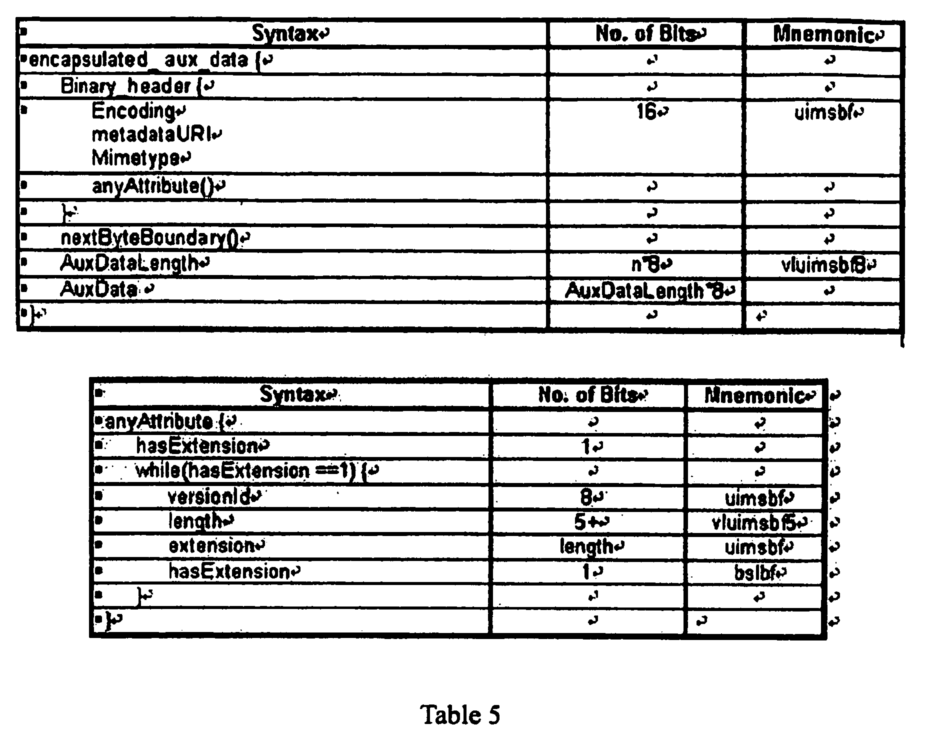

The container data including the file data is stored in the data repository and then transmitted. Information on the configuration of the data repository is defined in an auxiliary data repository. The auxiliary data includes information on type and Uniform Resource Identifier (URI) of the file data and is transmitted along with the file data.

Thus, the controller 130 detects the MIME type of each of the plural files, which is included in the corresponding application, from the auxiliary data of the container data in step 211.

When detecting the MIME type of each of the plural files, which is included in the corresponding application, from the auxiliary data of the container data in step 211, the controller 130 detects the MIME type of the corresponding application through the "contentMIMEType" of the acquisition fragment.

If the container data does not include the file data, the controller 130 detects the absence of the file data in step 209, and proceeds to step 212 so as to check a file list of the FDT which is received according to sessions.

Table 6 shows a scheme of the FDT.

As a result of checking the file list of the FDT, the controller determines whether the file list of the FDT includes the "content-type" defining the MIME type. If the file list of the FDT includes the "content-type" of the MIME type, the controller 130 detects the "content-type' of the MIME in step 213 and proceeds to step 214 so as to detect the MIME type of each of the plural files included in the corresponding application through the MIME type which is defined in the "content-type" of the MIME type included in the file list of the FDT.

If the file list of the FDT does not include the "content-type" of the MIME type, however, the controller 130 detects the absence of the "content-type" of the MIME type in step 213, and then proceeds to step 215 so as to detect the MIME type of each of the plural files included in the corresponding application through the extension of the file for the file download service which is defined in the file list of the FDT.

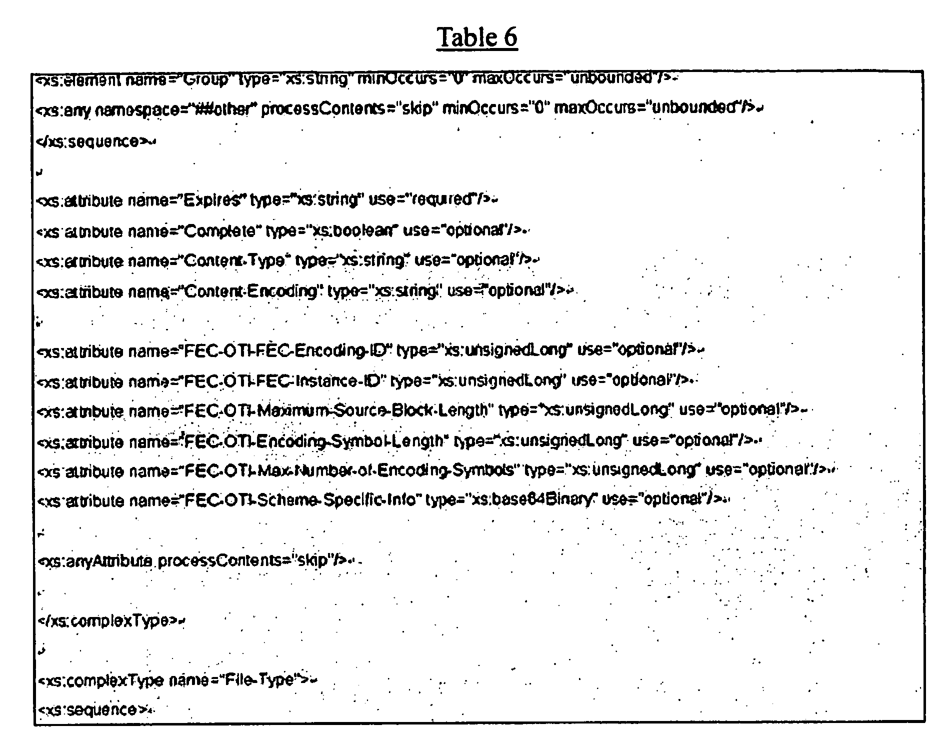

When detecting the MIME type of each of the plural files included in the corresponding application through the extension of the file or the "content-type" of the MIME type in the FDT in step 214 or 215, the controller 130 detects a type of the corresponding application through the "contentMIMEType" of the acquisition fragment.

Through steps 202 to 215, the controller 130 can detect the MIME type of at least one file which exists in at least one application for the file download service, and display the file download service of the ESG data. The acquisition fragment in Table 1 includes the SDP information for the service. If a user selects the download of a desired file in the state of displaying the file download service of the ESG data, the controller 130 analyzes the SDP information to secure SDP information, and then downloads the files, which are required to execute the application, using the file list of the FDT. If the container data includes the selected file, the controller 130 checks the file list in the FDT and a container file list for the file download service, and then downloads the corresponding container data.

As described above, the present invention provides the device and method for detecting the MIME type of at least one file for the file download service in the digital video broadcasting terminal, thereby classifying the type of the various files which are necessary for each application. Furthermore, although a new MIME type is created during transmission of various files, it is unnecessary to define the new MIME type.

While the invention has been shown and described with reference to a certain preferred embodiment thereof, it will be understood by those skilled in the art that various changes in form and details may be made therein without departing from the scope of the invention as defined by the appended claims.

## Claims

1. A device for detecting a Multimedia Internet Message Extension, MIME, type of at least one file for a file download service in a digital video broadcasting terminal, the device comprising:
a digital broadcasting reception unit for receiving Electronic Service Guide, ESG, data including information on a digital video broadcasting service;
a memory for storing information necessary for the file download service in the ESG; and
a controller for detecting the MIME type of each of plural files through at least one of an MIME type defined in a component description of a corresponding application, an MIME type defined in container data including file data, and an MIME type defined in a File Description Table, FDT, for an individual transmission of the file data, if the plural files exist in the corresponding application for the file download service in the ESG data.

2. The device as claimed in claim 1, wherein if the plural files exist in the corresponding application, the controller checks a component characteristic of an acquisition fragment and a component description of the corresponding application defined in the component characteristic, determines whether a file format element exists in the component description of the corresponding application, checks file names and MIME types defined in the component characteristic if the file format element exists, and detects the MIME type of each of the plural files through the checked file name and MIME types.

3. The device as claimed in claim 1, wherein if the plural files exist in the corresponding application, the controller checks a component characteristic of an acquisition fragment and a component description of the corresponding application defined in the component characteristic, determines whether a file format element exists in the component description of the corresponding application, determines whether container data including the file data is transmitted if the file format element does not exist, and detects the MIME type of each of the plural files through the MIME types defined in auxiliary data of the container data when the container data including the file data is received.

4. The device as claimed in claim 1, wherein if the plural files exist in the corresponding application, the controller checks a component characteristic of an acquisition fragment and a component description of the corresponding application defined in the component characteristic, determines whether container data including the file data is transmitted when the file format element does not exist in the component description of the corresponding application, determines whether the FDT includes a content-type of the MIME type when the container data does not include the file data, and detects the MIME type of each of the plural files through the MIME types defined in the content-type if the FDT includes the content-type of the MIME type.

5. The device as claimed in claim 1, wherein if the plural files exist in the corresponding application, the controller checks a component characteristic of an acquisition fragment and a component description of the corresponding application defined in the component characteristic, determines whether container data including the file data is transmitted when the file format element does not exist in the component description of the corresponding application, determines whether the FDT includes a content-type of the MIME type when the container data does not include the file data, and detects the MIME type of each of the plural files through extensions of the files defined in the FDT if the FDT does not include the content-type of the MIME type.

6. The device as claimed in one of claims 1 to 5, wherein if the plural files exist in the corresponding application, the controller detects a type of the corresponding application through an MIME type defined in an acquisition fragment.

7. The device as claimed in one of claims 1 to 5, wherein if a file exists in the corresponding application, the controller detects an MIME type of the file through an MIME type defined in an acquisition fragment.

8. A method for detecting a Multimedia Internet Message Extension, MIME, type of at least one file for a file download service in a digital video broadcasting terminal, the method comprising the steps of:
determining a total number of files which exist in a corresponding application for the file download service in Electronic Service Guide, ESG, data;
determining whether an MIME type is defined in a component description of the corresponding application if a plurality of files exists in the corresponding application;
detecting an MIME type of each of the plural files through the MIME type defined in the component description of the corresponding application if the MIME type is defined in the corresponding application; and
detecting an MIME type of each of the plural files through at least one of an MIME type defined in container data including file data and an MIME type defined in a File Description Table, FDT, for an individual transmission of the file data if the MIME type is not defined in the component description of the corresponding application.

9. The method as claimed in claim 8, wherein detecting the MIME type through the component description further comprises:
checking a component characteristic of an acquisition fragment;
checking a component description of the corresponding application defined in the component characteristic;
determining whether a file format element exists in the component description of the corresponding application;
checking a file name and MIME type defined in the corresponding component description if the file format element exists in the component description of the corresponding application; and
detecting the MIME type of each of the plural files through the checked file name and MIME type.

10. The method as claimed in claim 8 or 9, wherein detecting the MIME type when the MIME type is not defined in the component description further comprises:
determining whether the container data including filed data is transmitted;
detecting the MIME type of each of the plural files through the MIME type defined in auxiliary data of the container data if the container data including the file data is transmitted;
determining whether the FDT for the individual transmission of the file data includes a content-type of the MIME type; and
detecting the MIME type of each of the plural files through the MIME type defined in the content-type if the FDT includes the content-type of the MIME type.

11. The method as claimed in claim 10, further comprising detecting the MIME type of each the plural files through an extension of the filed defined in the FDT if the content-type of the MIME type is not defined in the FDT.

12. The method as claimed in one of claims 8 to 11, further comprising detecting a type of the corresponding application through an MIME type defined in an acquisition fragment if a plurality of files exists in the corresponding application.

13. The method as claimed in claim 8, further comprising detecting an MIME type of a file through the MIME type defined in an acquisition fragment if the file exists in the corresponding application.

14. A method for detecting a Multimedia Internet Message Extension, MIME, type of at least one file for a file download service in a digital video broadcasting terminal, the method comprising the steps of:
determining a total number of files which exist in a corresponding application for the file download service in Electronic Service Guide, ESG, data;
checking a component characteristic of an acquisition fragment if a plurality of files exists in the corresponding application;
checking a component description of the corresponding application defined in the component characteristic;
determining whether a file format element exists in the component description of the corresponding application;
checking a file name and MIME type defined in the corresponding component description if the file format element exists in the component description of the corresponding application; and
detecting an MIME type of each of the plural files through the checked file name and MIME type.

15. A method for detecting a Multimedia Internet Message Extension, MIME, type of at least one file for a file download service in a digital video broadcasting terminal, the method comprising the steps of:
determining a total number of files which exist in a corresponding application for the file download service in Electronic Service Guide, ESG, data;
checking a component characteristic of an acquisition fragment if a plurality of files exists in the corresponding application;
checking a component description of the corresponding application defined in the component characteristic;
determining whether a file format element exists in the component description of the corresponding application;
determining whether container data including file data is transmitted when the file format element does not exist in the component description of the corresponding application; and
detecting an MIME type of each of the plural files through an MIME type defined in auxiliary data of the container data if the container data including the file data is transmitted.

16. A method for detecting a Multimedia Internet Message Extension, MIME, type of at least one file for a file download service in a digital video broadcasting terminal, the method comprising the steps of:
determining a total number of files which exist in a corresponding application for the file download service in Electronic Service Guide, ESG, data;
checking a component characteristic of an acquisition fragment if a plurality of files exists in the corresponding application;
checking a component description of the corresponding application defined in the component characteristic;
determining whether container data including file data is transmitted when the file format element does not exist in the component description of the corresponding application;
determining whether a File Description Table, FDT, for an individual transmission of the file data includes a content-type of the MIME type when the container data does not include the file data; and
detecting an MIME type of each of the plural files through an MIME type defined in the content-type if the FDT includes the content-type of the MIME type.

17. The method as claimed in claim 16, further comprising detecting an MIME type of each of the plural files through an extension of a file defined in the FDT if the FDT does not include the content-type of the MIME type.

18. The method as claimed in one of claims 14 to 17, further comprising detecting a type of the corresponding application through an MIME type defined in the acquisition fragment if a plurality of files exists in the corresponding application.

19. The method as claimed in one of claims 14 to 17, further comprising a step of detecting a type of the corresponding application through an MIME type defined in the acquisition fragment if a file exists in the corresponding application.

20. A method for detecting a Multimedia Internet Message Extension, MIME, type of at least one file for a file download service in a digital video broadcasting terminal, the method comprising the steps of:
determining a total number of files which exist in a corresponding application for the file download service in Electronic Service Guide, ESG, data; and
detecting an MIME type of each of the plural files through at least one of an MIME type defined in a component description of the corresponding application, an MIME type defined in container data including file data, an MIME type defined in a File Description Table, FDT, for an individual transmission of the file data, and an extension of a file defined in the FDT.

21. The method as claimed in claim 20, further comprising detecting a type of the corresponding application through an MIME type defined in an acquisition fragment if a plurality of files exists in the corresponding application.

22. The method as claimed in claim 20, further comprising detecting an MIME type of the file through an MIME type defined in an acquisition fragment if a file exists in the corresponding application.
